# EUROPEAN PATENT SPECIFICATION

(11) **EP 2 063 600 B1**
(45) Date of publication and mention of the grant of the patent: **22.07.2015**
(21) Application number: 07291385.8
(22) Date of filing: 22.11.2007
(51) Int. Cl.: H04L 29/06

(54) **Method of controlling a call-session**
Verfahren zum Steuern einer Anrufsitzung
Procédé de contrôle d'une session d'appel

(43) Date of publication of application: 27.05.2009
(73) Proprietor: ALCATEL LUCENT, 92100 Boulogne-Billancourt (FR)
(72) Inventor: Wahl, Stefan, 71701 Schwieberdingen (DE); Strauss, Thomas, 73734 Esslingen (DE)
(74) Representative: Wetzel, Emmanuelle

(56) References cited:
- WO-A-03/075596
- US-A1- 2007 086 582
- "Digital cellular telecommunications system (Phase 2+); Universal Mobile Telecommunications System (UMTS); IP Multimedia Subsystem (IMS); Stage 2 (3GPP TS 23.228 version 7.4.0 Release 7); ETSI TS 123 228" 1 June 2006 (2006-06-01), ETSI STANDARDS, LIS, SOPHIA ANTIPOLIS CEDEX, FRANCE , XP014035471 ISSN: 0000-0001 * paragraph [4.2.4B] *

## Description

The present invention relates to a method of controlling a call-session in particular an IMS call session in an IP-packed based communication network by means of a call-session-control system, and to a call-session-control system for executing the method (IMS = IP multimedia subsystems, IP = internet protocol).

Nowadays, the integration of IMS/P-CSCF (P-CSCF = proxy call-session-control-function) and SBC functions (SBC = session border controller) into a single IMS edge node, covering all functions mandatory at the IMS border, is an obvious and advantageous next evolution step. A further reasonable integration step upgrades this network element towards a fully integrated IMS node, as from now called IMX (IMX = IP Multimedia exchange). The IMX implements all the mandatory enhanced SBC (eSBC = enhanced SBC) features, extended with additional I-, S-CSCF signaling functions (I-CSCF = interrogating call-session-control-function, S-CSCF = servicing-call-session-control-function) and basic AS (AS = application server) capabilities. Thus, the IMX becomes the major call control node within IMS which allows simplifying the IMS scenarios significantly as the IMS network consists mainly of a cluster of distributed IMX nodes and a number of special application servers. The concept offers two principal options for efficient integration of the HSS (HSS = Home Subscriber Server), the central data base facilitating call and session enablement, as well as service authorization and authentication for the IMS and related accesses:
use of existing HSS (the IMX nodes cover the Subscriber Location Function providing the information on the HSS that contains the profile of a given subscriber) or a distributed HSS implemented by the IMX cluster.

From the perspective of SBC vendors, the integration of IMS-specific functions into an SBC towards an IMX is the logical next step. From a softswitch centric perspective the driving factor is the increased efficiency of the overall IMS network. The technical reasons are, e.g.:

A significant portion of the SIP messages between P-, I- and S-CSCF and AS can be processed within the IMX, which reduces the processing for SIP messages (SIP = session initiation protocol) and accelerates the signaling and media session control process at the same time.

Adding basic and often-used AS functions into the IMX also improves the processing as the signaling and control messages can be performed with an optimized IMX internal protocol.

A single breed of box serves all the SIP based call control related processing.

AS functions, which require activity at different border nodes, profit from optimized and more flexible messaging beyond SIP between external AS and the IMX application support functions. "Seamless session mobility" is an example function which profits from service logic running on the IMX AS function interacting node-internally with session signaling, media processing and stream switching layer.

For the above described a network architecture and node element has to be designed which fulfils the following requirements: of being an failed-safe concept, in particular function replacement in case of error or failure, of providing high scalability for signaling and IP-based internet applications, and preferably of providing intra and inter IMX node load-balancing concept.

There are two different solutions how to process a SIP-user request in an IMS domain:

First, a load-balancer dispatches all incoming user specific SIP requests to the responsible CSCF functions. All user relevant call-session data, states and timers are stored and processed locally on the processing CSCF. A new incoming IMS-call-session is routed to the responsible CSCF function where the user is registered.

Second, an IP load-balancer dispatches all incoming SIP requests to SIP proxies. Only now the SIP proxies look into the SIP messages and on the basis of dedicated parameters as call-session-id the proxy forwards the message to the responsible CSCF. The forwarding to other IMS functions is depending on which CSCF the user has its running call-sessions processed. A new incoming call-session of a user gets a new load-balanced by the SIP proxies.

Examples of those solutions are disclosed in :
- Document D1 (Publication Number = US2007/086582), which discloses an Internet Protocol Multimedia Subsystem (IMS) includes a Serving-Call Session Control Function (S-CSCF). The S-CSCF includes a Service Capability Interaction Manager (SCIM) configured to invoke one or more application services in response to a message being received by the S-CSCF; and
- Document D2 (Publication Number = WO03/075596) discloses a technique in which there is allocated one of a plurality of serving call state control functions to a subscriber, the technique including: receiving load information from at least one serving call state control function; and determining a serving call state control function for the subscriber in dependence on the received load information, wherein the receiving step includes receiving the load information during subscriber registration in a signal received from a serving call state control function to an interrogating call state control function.

However, in the two above described approaches all user and call-session related data and information is stored locally on the responsible CSCF for the user. Therefore the complete CSCF has to be doubled in standby with all its user call-session related information. Thus in an error case the doubled CSCF can stand in for the failed CSCF to proceed all running user calls-sessions. Doubling means all running service logic, call-session related data, e.g. SIP messages, states, timers etc. copying to another CSCF.

Therefore, it is the object of the invention to improve the controlling of a call-session in an IP-packed based communication network.

The object of the present invention is achieved by a method of controlling a call-session, which is preferably an IMS-call-session, in an IP-packed based communication network by means of a call-session-control system, whereby at least one call-session-control object and at least one call-state-data object is initiated for each call-session controlled by the call-session-control system, wherein the respective at least one call-session-control object and the associated at least one call-state-data object provide together the functionality of a call-session-control-function for the respective call-session, whereby the call-state-data object holds the call- and session-state data of the call-session-control-function and the call-session-control object provides the functional part of the call-session-control-function specified by one or more service-execution-logic-functions and accesses the associated call-state-data object to be informed about the call- and session-state, and distributing call related messages received by the call-session-control system to the associated call-session-control object by means of a resource-dispatcher provided by the call-session-control system. The object of the present invention is also achieved by a call-session-control system for controlling a plurality of call-sessions, which are preferably IMS-call-sessions, in an IP-packed based communication network, the call-session-control system comprises one or more processing nodes for processing a plurality of call-session-control-functions associated with the call-sessions, wherein the call-session-control system comprises a resource-dispatcher executed at one or more of the processing nodes and adapted to instantiate at least one call-session-control object and at least one call-state-data object for each call-session controlled by the call-session-control system, wherein the respective at least one call-session-control object and the associated at least one call-state-data object provide together the functionality of a call-session-control-function for the respective call-session, whereby the call-state-data object holds the call- and session-state data of the call-session-control-function and the call-session-control object provides the functional part of the call-session-control-function specified by one or more service-execution-logic-functions and accesses the associated call-state-data object to be informed about the call- and session-state, and distribute call related messages received by the call-session-control system to the associated call-session-control object by means of a resource-dispatcher provided by the call-session-control system.

The present invention enables the establishment of an efficient and failed-safe call-session-control system handling a huge number of call-session in parallel. The crashed or misbehaving of a single object has no impact on the execution of the respective call-session-control-function. A complete reinitiation of call-session-control-functions is not any longer necessary. Further, it is possible to instantiate the call-session-control objects and the call-state-data objects associated with one call-session at different processing nodes of the call-session-control system. In this way a natural load-balancing is possible, i.e. a crashed or misbehaving object can be initiated at next available resource by the resource dispatcher. Thereby the resource-dispatcher provides a middle-ware failed-safe concept and an efficient usage of resources. The call-session-control system consequently provides also a higher scalability for signaling of IP-based internet applications. In other words the separation of service-logic and call related data, in particular call-state data, results in a more flexible and reliable internal service-logic processing on single and between multiple IMS functions, e.g. call-session-control and application layer functions. Thereby it is easier to adjust and balance these functions through the whole network. In addition the load-balancing is more easily to achieve. It becomes possible to exchange the logic functions independent of their location and their processing state.

Further advantages are achieved by embodiments of the invention indicated by the dependent claims.

According to a preferred embodiment of the invention the call-state-data object holds at least all transient call related data of the associated call-session-control-function. Thereby the call-session-control object is totally independent of the call-state and the crash of a call-session-control object has no impact on the execution of the associated call control function.

According to a preferred embodiment of the invention the resource-dispatcher monitors if a running call-session-control object crashes or is misbehaving. Preferably, the resource-dispatcher monitors periodically every 0.1 sec to 1.0 sec if a running call-session-control object crashes or is misbehaving. If the resource-dispatcher detects such object then the resource-dispatcher instantiates a new call-session-control object for continuing the processing of the call-session-control-function for the respective call-session. The new call-session-control object accesses the call-state-data object associated with the crashed object to get the related call- and session-state data. Thereby the complete instantiation of a new call-session-control-function can be avoided, i.e. only the functional part of the call-session-control-function is instantiated. The data of the associated call-state-data object is not lost, therefore the reliability, scalability and performance of processing call-sessions is improved.

According to a further preferred embodiment of the invention the resource-dispatcher instantiates two or more call-state-data objects for each call-session. The resource-dispatcher or an other entity of the call-session-control system mirrors, preferably periodically, data hold by the two or more call-state-data objects. Preferably, the resource-dispatcher instantiates a mirroring control object which controls the mirroring of data between the respective set of call-state data objects. Preferably, every 0.1 sec to 1.0 min the resource-dispatcher or an other entity of the call-session-control system mirrors data hold by the two or more call-state-data objects. The two or more call-state-data objects can be held at different processing nodes in order to improve the reliability of the call-session. Thereby a high reliability of the processing of the call-session is obtained, because if an calls-state-data object crashes or is misbehaving then there exists a back-up call-state-data object which can be used for the further processing of the call-session. Preferably, during the instantiation of the call-session-control object the resource-dispatcher provides information about references to the two or more call-state-data objects for each call-session. Further it is possible that the resource-dispatcher or another entity of the call-session-control system, e.g. the respective call-session-control object, mirrors the data hold by the two or more call-state-data objects at predefined points of the call processing function.

According to a preferred embodiment of the invention the resource-dispatcher or another entity of the call-session-control system mirrors the transient call-and session-state data only. Preferably, the transient call- and session-state data hold by the two or more call-state-data object comprises call-session-states, timers etc.. Furthermore, it is also possible that the resource-dispatcher or an other entity of the call-session-control system mirrors the persistent call-session data, like SIP-messages, IMS-call-messages, message sequences, call-session-data etc., too. The transient call- and session-state data and the persistent call-session data of the call-session provide the call related data.

According to a preferred embodiment of the invention the resource-dispatcher monitors if a running call-state-data object crashes or misbehaving. Preferably, the resource-dispatcher checks periodically, e.g. every 0.1 sec to 1.0 min, the state of a running call-state-data object. If the resource-dispatcher detects such object then the resource-dispatcher replaces such object by one of the other call-state-data objects associated with the call-session. For replacing such object the call-state-data object is periodically mirrored, or mirrored, as soon as a predefined event is detected. In order to provide a high reliability more than one copy of a call-state-data object is provided.

According to a preferred embodiment of the invention the resource-dispatcher executes the following procedures for replacing a crashed or misbehaving call-state-data object. It instantiates a new call-session-control object for continuing the processing of the respective call-session-control-function. In order to instantiate the new call-session-control object, the resource-dispatcher first terminates the running call-session-control object which accesses the crashed or misbehaving call-state-data object. The new call-session-control object is adapted to access the new call-state-data object which was selected by the resource-dispatcher as replacement for the crashed object, to get the related call- and session-state data, e.g. it is instantiated with a link to the new data object instead to the replaced object.

According to a preferred embodiment of the invention the resource-dispatcher holds an instance-assignment-table of instance-assignment-vectors whereby each vector is assigned to a corresponding call-session. Each vector comprises data about the at least one call-session-control object. Furthermore, the resource-dispatcher holds data assigning the at least one call-state-data object to the associated respective call-session, e.g. a further vector, and comprising data about the at least one call-state-data object. In particular, the data comprises the respective call-session-control or call-state-data object-id, processing-node-id, blade-id, local-instance-id, respectively. Preferably, this data, e.g. the further vector, comprises two or more call-state-data object-ids corresponding to mirrored call-state-data objects for providing a set of redundant call-state-data objects to the call-session-control object. The instance-assignment-table provides a fast accessible table for load-balancing between the processing nodes of the call-session-control system and for dispatching call-session-control objects. The resource-dispatcher updates the instance-assignment-table, e.g. by means of respective middle-ware functions. In particular, it is possible that the resource-dispatcher holds two tables or two vectors, wherein one table or one vector of the two tables or the two vectors, i.e. the instance-assignment-table, comprises the data about the at least one call-session-control object and the other table or the other vector of the two tables or the two vectors comprises data about the at least one call-state-data object of the associated respective call-session. But, it is also possible that all this data is hold in a single table and/or a single vector.

According to a preferred embodiment of the invention the call-session-control system comprises one or more processing nodes. Each processing node comprises one or more processing blades. The resource-dispatcher is adapted to dynamically distribute the call-session-control objects and the call-state-data objects of the call-sessions between the processing blades of the processing nodes for load-balancing. Preferably, each blade is adapted to process in parallel or sequential a plurality of call-session-control objects. Further, each processing blade is preferably adapted to process and hold a plurality of call-state-data objects.

When executed on the processing nodes at the call-session-control system, the call-session-control objects and the call-state-data objects preferably provide the functionality of a servicing-session-control-function, i.e. a S-CSCF, a interrogating-session-control-function, i.e. a I-CSCF, and/or a proxy-session-control-function, i.e. a P-CSCF, for one or more call control sessions.

These as well as further features and advantages of the invention will be better appreciated by reading the following detailed description of presently preferred exemplary embodiments taken with the accompanying drawings of:
- Figure 1: shows a processing node of the call-session-control system.
- Figure 2a: shows two processing nodes of the call-session-control system operating normally.
- Figure 2b: shows two processing nodes of the call-session-control system where at one processing blade of a processing node a processing unit failed or a call-session-control object has crashed or is misbehaving.
- Figure 2c: shows two processing nodes of the call-session-control system where at one processing blade of a processing node a database processing unit failed or a call-state-data object has crashed or is misbehaving.

- Figure 2d: shows two processing nodes of the call-session-control system where at one processing blade of a processing node a processing blade failed.
- Figure 3: shows a principle structure of the resource-dispatcher in combination with other entities of the call-session-control system.
- Figure 4: shows a principle structure of the IAT and its connection with the processing nodes of the IMX-cluster.
- Figure 5: shows in a more abstract way the separation of stateless call control processing logic, i.e. CSCFs, and call state and user specific information data.
- Figure 6: shows a re-register procedure of a user client in cooperation with the IAT.
- Figure 7: shows a replacement of a local instance in the IAT.

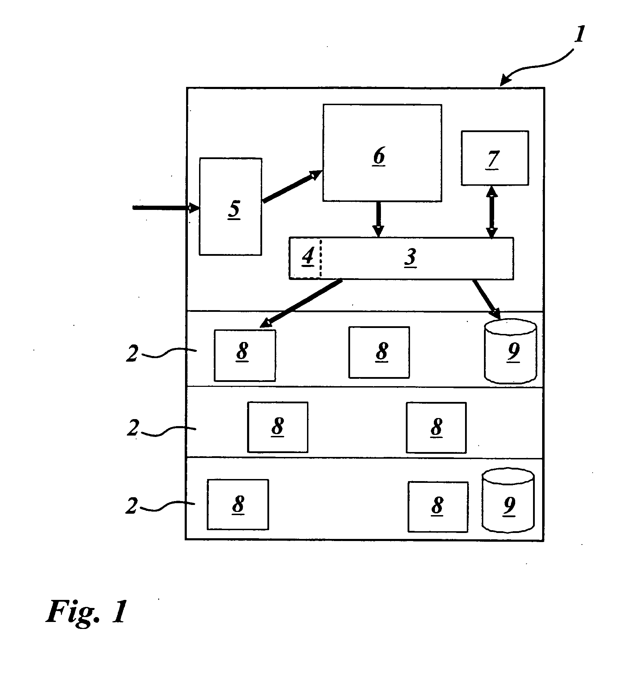

Figure 1 shows a processing node 1, also called a IMX node 1, of a call-session-control system for controlling a plurality of IMS-call-sessions in an IP-packed based communication network. The call-session-control system comprises one or more processing nodes 1 for processing a plurality of call-session-control-functions associated with IMS-call-sessions at one or more processing units. Thereby the call-session-control system provides a cluster infrastructure by means of a plurality of IMX nodes 1. The IMX cluster is fully IMS compliant and thereby provides means for attending SIP-, peer-to-peer SIP-, SOAP-messages (SOAP = Simple Object Access Protocol), AS functionality of session signaling, media- and multi-media-processing, stream switching, IP transport, as well as security- and signaling gateway functions etc.. Within the IMX cluster a reliably and failed-safe resource management is provided by a middle-ware.

The IMX node 1 comprises a resource-dispatcher 3 with an IAT 4 (IAT = instance-assignment-table) and one or more processing blades 2. Furthermore the processing node 1 provides additional units to assist the resource-dispatcher 3, in particular a border proxy 5 for receiving SIP- and/or IMS-messages, a call-manager 6 or core proxy 6 and a resource-manager 7. Each processing blade 2 provides two or more processing units 8 which provides data processing resources for processing call-session-control objects and preferably one or more database units 9 for hosting call related data objects, in particular call-state-data objects.

Further, the IMX node 1 comprises the necessary communication means, i.e. hardware and software means, for communicating via the IP-packet based communication network. The communication means are for instance an Ethernet card, a modem, a wireless local area network card and a TCP/IP-stack (TCP = transmission control protocol) as well as a SIP-stack. Thereby the IMX node 1 provides the functionality of communicating according to SIP-, SOAP-, TCP/IP-protocols etc..

Preferably, the resource-dispatcher 3 directly exchanges data or information with other IMX-nodes 1 of the call-session-control system via a middle-ware, indicated by a dashed double arrow.

The present invention uncouples the service execution logic functions, i.e. CSCF, from the user specific call-session related data. This provides a more efficient, failed-safe and reliable process execution and lower redundancy costs in the IMS domain or the IMX cluster. From the separation, i.e. the splitting of CSCFs in call-session-control and call-state-data objects, follows that the service logic of call control provided by the IMS or application layer functions, like CSCFs, are made stateless as it stores no call session related data. Therefore the service logic which processes the call related data can be anytime dynamically exchanged or swapped to another CSCF, i.e. another call-session-control object. This can be done even during its execution and independent of the current call-session-state. In addition the new selected - backup - CSCF, i.e. a new selected - backup - call-session-control object, can be located independent of the exchanged one.

Further the call-session-control system separates the so called persistent and ephemeral call-session data. Two separate objects are responsible for storing first the transient data like call-session states, timers etc. and second the persistent data like SIP-messages, message sequence, call session data etc. These two objects comprise together the call session related data.

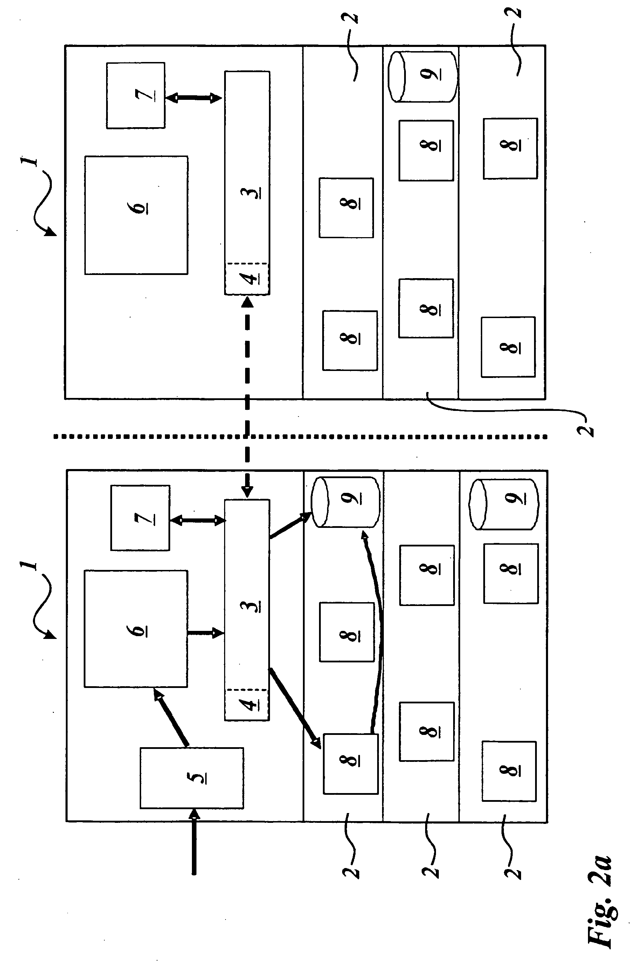

### Different exchanging scenarios are shown in the Figures 2a to 4:

Figure 2a shows two IMX-nodes 1, each node comprises a call-manager 6, a resource manager 7, a resource-dispatcher 3 and various blades 2 with processing units 8 and database units 9. The resource-dispatchers 3 at the different IMX-nodes of the system interacts with one another to synchronize the allocation of resources and provide a common knowledge of free and occupied resources.

Figure 2a demonstrates the principle way of attending an incoming IMS-call-message received at a border proxy 5 at the left IMX-node 1. The call-manager 6 of this IMX-node 1 processes the IMS-call-message, i.e. determines the type of the CSCF and the IMS-call-session-id. The resource-dispatcher 3 accesses the IAT 4 and determines by means of the data hold by the IAT 4 and by means of the resource-manager 7 the resources used for the processing of the CSCF. For example, the resource-dispatcher 3 selects the first processing unit 8 of the top processing blade 2 at the left IMX-node 1 as processing node for the processing of the call-session-control object, i.e. the functional part of the CSCF. Further, it determines to hold the associated call-state-date object which provides the call- and session-state, i.e. call related data, at the database unit 9 at the same top processing blade 2 at the same left IMX-node 1.

The resource-dispatcher 3 is responsible to look for running, crashed, misbehaving etc. resources, like processing units 8 or call-session-control objects. If a running CSCF function or call-session-control object at a processing unit 8 crashes or is misbehaving, the resource-dispatcher 3 creates a new call-session-control object to continue the processing. Since the IMS-call-session gets the related call session states and timers from a separate object, the call-state-data object, it is possible to exchange the resources executing the call control function independent from their processing state anytime and dynamically by another resource. These resources can also be exchanged independently of their location. Thereto the resource-dispatcher 3 updates information about the available resource via the middle-ware.

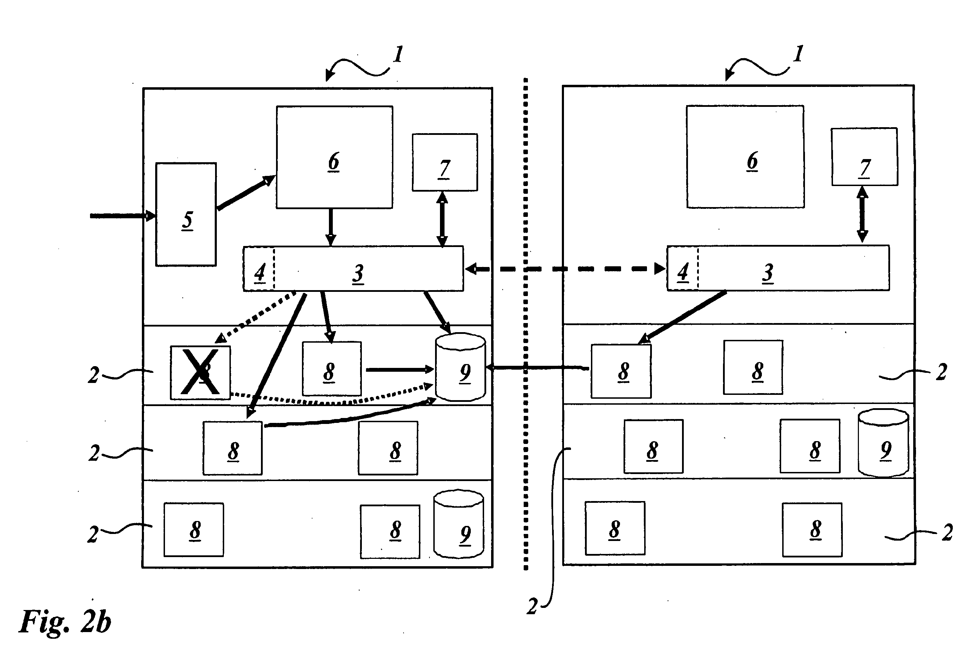

The following Figures 2b to 2d show possible resource exchange and movement scenarios:

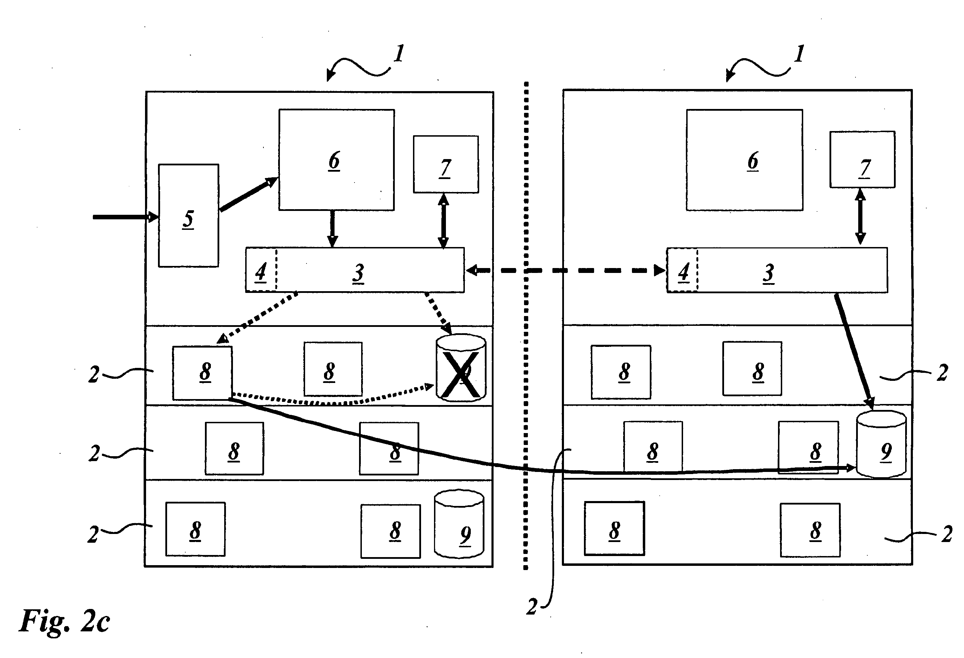

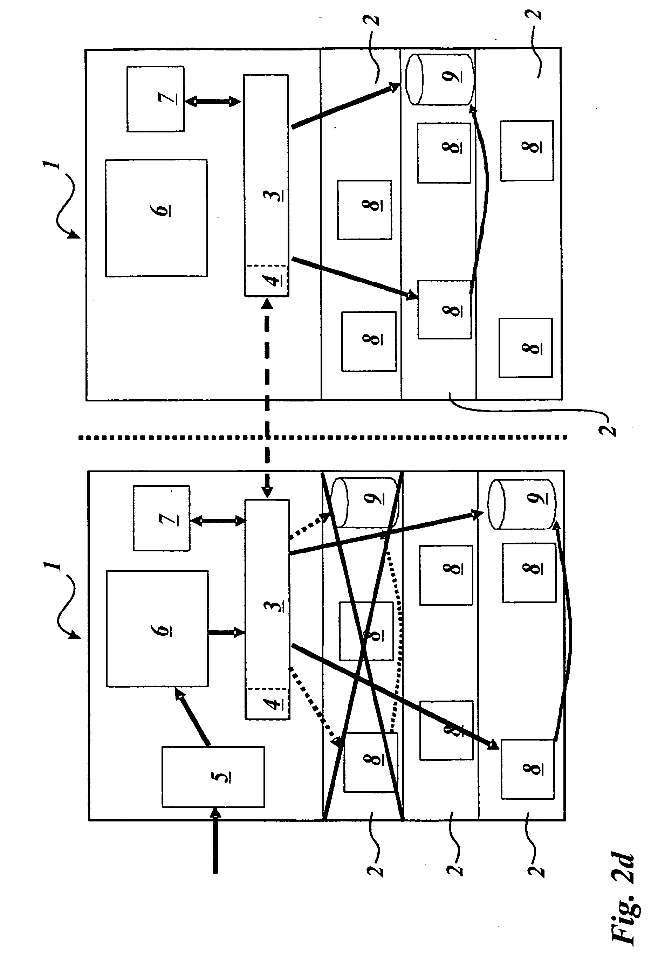

The Figures 2b to 2d show a crashing of involved processing units or objects, for instance located at the left IMX-node 1. Figure 2b shows a crashing or misbehaving that impacts the functional part of the CSCF. Such crashing or misbehaving can be caused by the crashing or the misbehaving of the call-session-control object or the respective processing unit 8. Fig. 2c shows a crashing or misbehaving of a call-state-data object or the database unit 9 holding this object. Fig. 2d shows a failure of a whole processing blade 2 of an IMX-node 1. A failure at or of such a unit is indicated in the Fig. 2b to 2d by X.

In all scenarios, the call-session-control object of the CSCF of the IMS-call-session is replaced by a local or a remote call-session-control object at a, preferably different, processing unit 8, if a call-session-control object or the respective processing unit 8 is crashed or misbehaving. Also in all scenarios, the data objects are replaced by a local or a remote respective data object at a preferably different data processing unit 9 if call-state-data object, a call related data object or the assigned database processing unit 9 is crashed or misbehaving. In every scenario the resource-dispatcher 3 determines via the middle-ware which resources are available within the cluster of IMX-nodes 1. The resource-dispatcher 3 load-balances the dispatching of the execution of CSFCs to improve the reliability of the IMX cluster.

Figure 2b shows three alternatives of replacing in case of a failure at the first processing unit 8 of the first processing blade 2 of the left IMX-node 1. One possibility is to use the second processing unit 8 located on the same processing blade 2. It is also possible to use the first processing unit 8 on the second processing blade 2 at the same processing node 1. Further, it is possible to dispatch the new call-session-control object at the first processing unit 8 of the first processing blade 2 at the right IMX-node 1, which is administrated by the resource-dispatcher 3 of the right IMX node 1, i.e. a further processing node 1. The resource-dispatcher 3 of the right IMX node 1 receives the respected request through the middle-ware from the resource-dispatcher 3 of the left IMX node 1. In all these cases, the resource-dispatcher 3 instantiates a new call-session-control object at the selected new processing unit 8. This new call-session-control object contains a link pointing to the associated call-state-data object held at the database unit 9. The new object contains the same link as the old object and accesses the same call-state-data object to get information about the call and session states.

Fig. 2c shows the occurrence of a failure at a database unit 9 of the first processing blade 2 at the left processing node 1. This database unit 9 holds a call-state-data object associated with the processing of the CSCF at the first processing unit 8. The resource-dispatcher 3 replaces this unit with a remote database unit 9 of the second processing blade 2 of the right processing node 1 and instantiates a new call-state-data object at the selected new database unit 9. Furthermore the resource-dispatcher 3 adapts the link pointing to the old call-state-data object(s) so it points to the new one or replaces the call-session-control object(s) associated with the call-session with the new ones having a link that points to the new call-state-data object(s).

Figure 2d shows the replacement of a processing blade 2, which is showing a failure, of the left processing 1. The processing blade 2 used for replacement can reside locally at the same node 1 or remotely at a further IMX-node 1. In both cases the replacement of the processing blade 2 is attended by the resource-dispatcher 3 and both, the processing unit 8 and the database unit 9 is replaced by a new one. The resource-dispatcher 3 selects (a) new call-state-data object(s) and instantiates (a) new call-session-control object(s) having a link that points to the new call-state-data object(s).

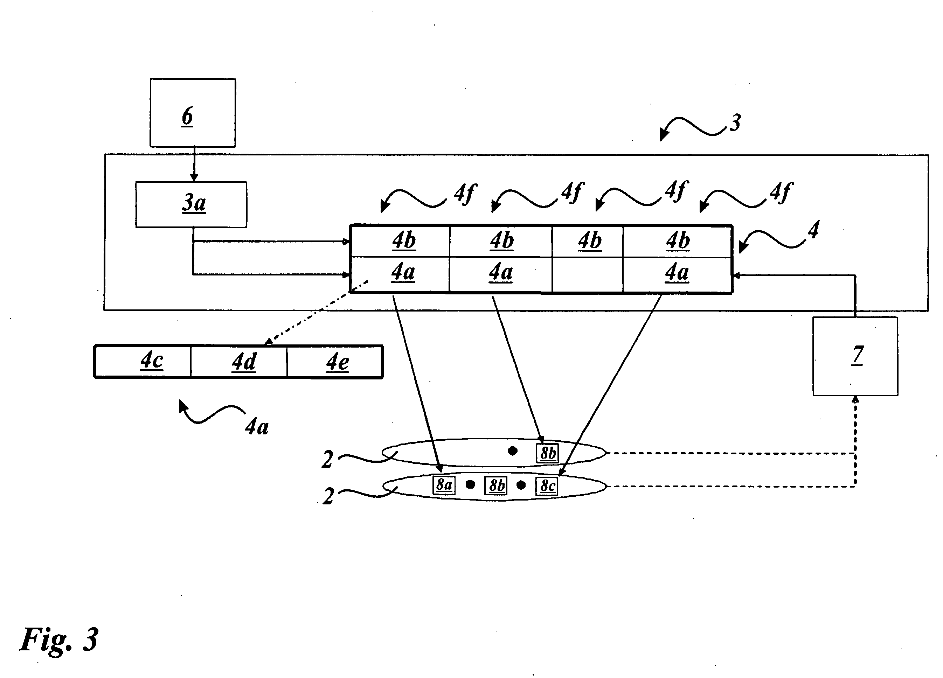

Figure 3 shows in more detail the resource-dispatcher 3 with the IAT 4 and the dispatcher 3a. The IAT 4 is the connector between the call-manager 6 (CM = call-manager), the resource-manager 7 (RM = resource-manager) and the given resources of the IMX-cluster. The IAT 4 lists the available resources which are managed by the RM 7. The RM 7 can individually, asynchronously and independently assign and exchange local and remote used resources. By means of a middle-ware, the RM 7 collects information necessary to assign and exchange local and remote used resources. The dispatcher 3a updates the IAT 4 upon information received by the CM 6. The IAT 4 is a table of instance-assignment-vectors 4f for each IMS-call-session. The instance-assignment-vector 4f comprises information about the state 4b and type of presently applicable CSCF and information about the respective instance 4a. The information about the instance 4a comprises in particular a call-session-control-id, a call-state-data-id, a processing-node-id and a local-instance-id. In case that a specific instance-assignment-vector 4a is not available then this state is indicated within the information about the state 4b, e.g. as "not available" and the corresponding information about the instance 4a is empty. For example one, in Figure 3 the upper, processing blade 2 is adapted only to process S-CSCF 8b, whereas the other, in Figure 3 the lower, processing blade 2 is adapted to process P-CSCF 8a, S-CSCF 8b and I-CSCF 8c. The information about the instance* 4a of the IAT 4 points to the respective CSCF 8a, 8b, 8c at the processing blades 2, which is indicated in the Figure 3 by arrows.

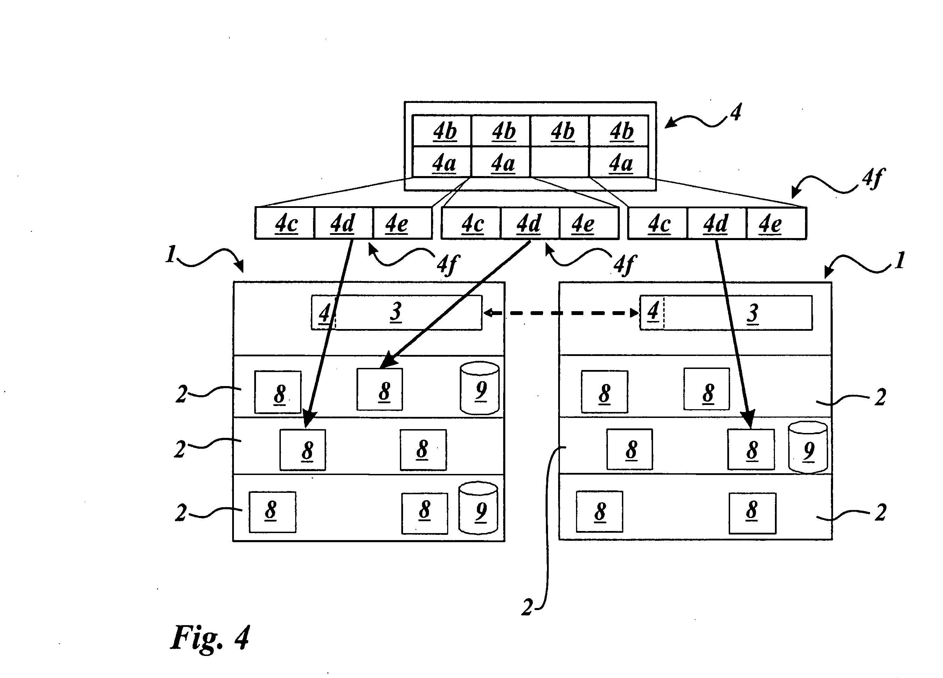

Further details of the instance-assignment-vector 4f and information about the instance 4a is described in the following in conjunction with Figure 4. A resource instance is marked by a so called instance vector 4a which is a sub-vector of the instance-assignment-vector 4f and comprises the information about the instance 4a. Alternatively to the above, this vector 4a is split in three parts. First the processing node 1, second the processing blade 2 and third the local instance name. By this alternative practically the same information is provided as in the above. In any case, by this addressing scheme it is possible to exchange complete processing blades 2 or complete blocks of resources, as the RM 7 can only enter or change the running resource listed in the second row of the IAT 4, see Figure 3.

The IAT 4 can also be used for statistical and forecasting issues. The location and the state value of the IAT 4 are attributes for algorithms which help to adjust and balance, i.e. the load-balance, the needed and running resources in the IP-packed based communication network. This knowledge can be used first by the resource-dispatcher 3 itself and second by the independent running resource manager 7.

In the following embodiment of the invention, the call related data is held by a CM object (CMObj = CM object) and a call-state-data object (CSStateObj = call-state-data object). Furthermore the resource-dispatcher 3 is implemented as part of the call-manager 6.

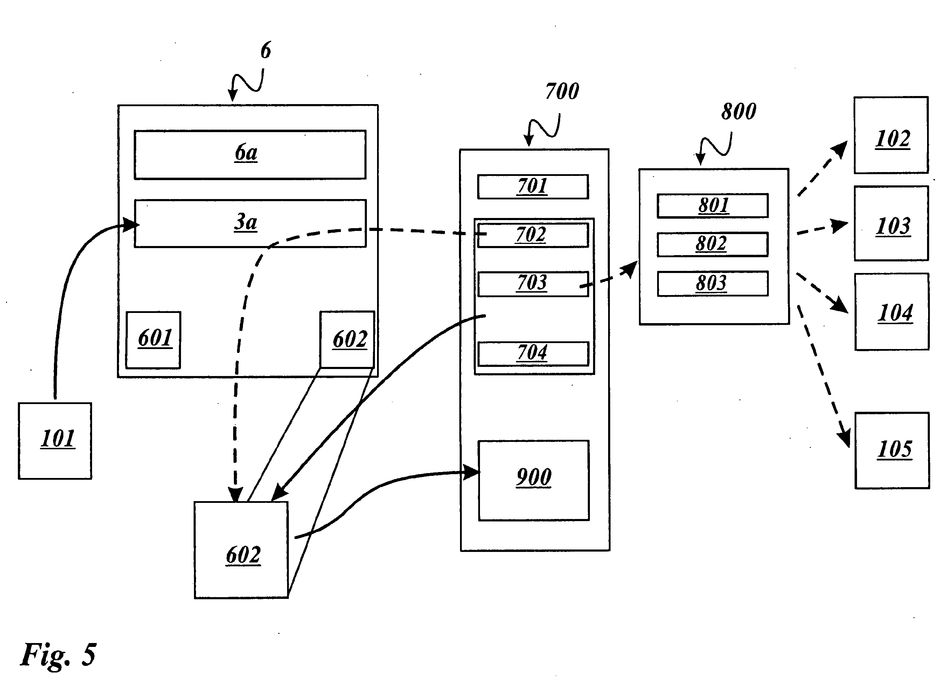

Figure 5 shows more abstractly the separation of stateless call control processing logic, i.e. CSCFs, and call state and user specific information data. The CM 6 which stores references to the required service logic instances (P- , S-CSCF, etc.), holds and controls the IMS-call-session relevant timers 6a and the references to the call and session state objects CSStateObjs 800. The references, i.e. the IAT 4 content, are managed by the RM 7. The CM 6 covers in the example the functionality of the resource-dispatcher 3.

A new IMS-call-message object 101 (MObj = IMS-call-message object), i.e. a new IMS-call-message which is received and processed by the dispatcher 3a, requires a respective CSCF instance 602 of the available CSCF instance 601, 602. The CSCF instances 602 may be executed at any processing unit 8 within the IMX domain, but preferably on the same IMX node 1. The execution of such an instance 602 may fail with a small probability. For reliability reasons a failed execution of an instance shall not destroy the state information of the transaction, e.g. new call setup, or even the CMObj 700. Therefore, the results produced by the instance 602 are stored within a transient area 900 of the CMObj. At successful completion of the instance method invocations, preferably indicated to the CM 6 by a valid and positive feedback, the CM 6 organizes the transfer of the transient information field 900 to the corresponding CMObj call-session references. As the CM instance holds the call-session critical information it is necessary to have a fallback instance running in parallel, preferably at another IMX-node 1. In contrast, the service logic instances (P-, I-, PIS-CSCFs etc.) can be exchange dynamically during their execution. Here PIS-CSCF refers to CSCFs which comprise the functionality of P-, I-, and S-CSCFs.

The processing of new incoming message objects MObjs 101 for a call-session is composed of six steps:
Step 1 to 3: The dispatcher 3a, i.e. the CM dispatcher function, gets the new MObj event 101 and evaluates which of the call-session-control-functions (P-CSCF, S-CSCF, or others) have to be addressed. By using the IAT 4 the corresponding processing instance 602 is invoked. Here it is supposed to invoke the S-CSCF 602. Therefore the CM 6 provides the object references of MObj and CMObjt 700 to the processing S-CSCF. The CMObj 700 comprises a CM dispatcher state values 701, a user profile 702, data about one or more IMS-call-sessions 703 as well as data about other transactions 704.

Step 4 and 5: The S-CSCF instance 602 gets also a read-only access to the CSStateObj information fields 801, 802, 803 of the CSStateObj 800 of the present IMS-call-session and a read/write access to an intermediate information area 900 of the CMObj 700. The S-CSCF 602 may use this area 900 to store permanent and transient information. Permanent information will later override the secured CSStateObj 800 information fields 801, 802, 803, like Invite, Ringing, Prack etc. Further corresponding MObjs 102, 103, 104, 105 to those of CSStateObj 800 can be generated, like INVITE, 183SP, PRACK, 2000K etc. This will happen as soon as the S-CSCF 602 execution was successfully completed.

Step 6: If any kind of S-CSCF misbehavior happens the CM 6 observes this instance execution, in particular by means of timers, positive method feedbacks, and can stop the S-CSCF 602 execution or simply ignore the data in the intermediate information area 900. In case of error detection the CM 6 requests immediately a new S-CSCF instance 602 from the RM 7. The CM 6 can restart the processing by applying the new instance and providing a new intermediate data area.

The misbehaving instance results will be ignored and an error indication is given to the RM 7 which can then decide to request a restart of this instance.

The IAT 4 is part of the CM 6 and the connector to the RM 7. The IAT 4 lists the available resources which can be deployed by the CM 6. The RM 7can exchange resources within this IAT 4 very dynamically and independently.

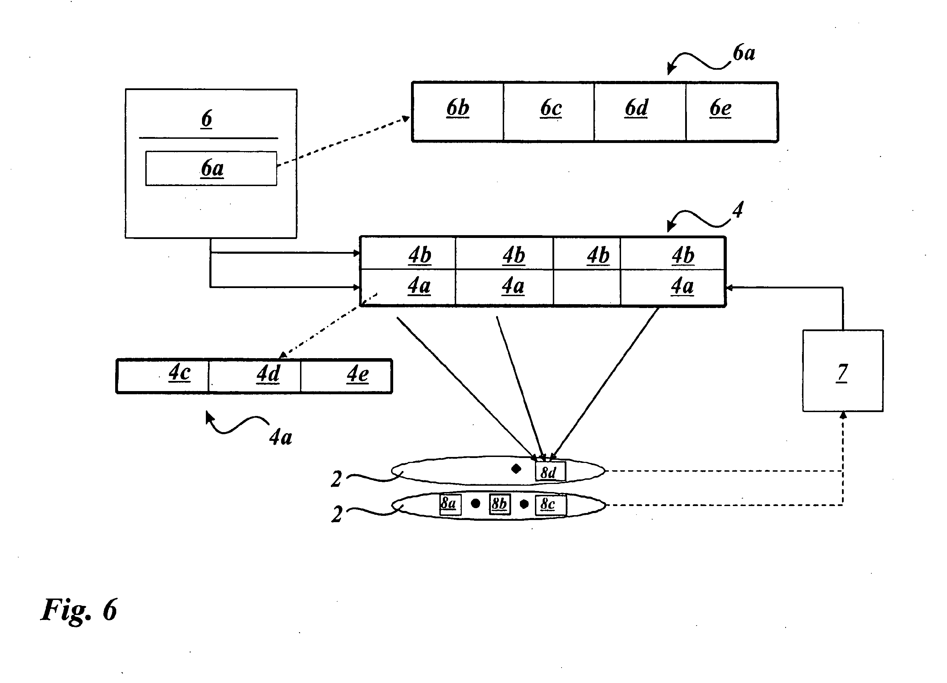

The Figure 6 shows the re-register procedure of a user client in cooperation with the IAT 4. The CM 6 comprises a timer 6a for holding timer records. The timer record comprises a timer expiration time 6b, a method name 6c, e.g. "re-register user", an object reference 6d, e.g. "S-CSCF" and further MObjs, CMObjs 6e. In the shown example the expiration timer 6b defines the time period when a user client has to re-register and observes the regular re-registration of the respective UA (UA = user agent). If this timer expires the CM 6 calls the "re-register user" method within the functional component of the S-CSCF. The functional component S-CSCF is not the reference to the instance. To get the instance reference the CM 6 accesses the IAT 4.

The CM 6 performs an indirect functional component (e.g. P-CSCF, I-S-CSCF) invocation. The CM 6 addresses the internal table, i.e. the IAT 4, using the function identifier (e.g. S-CSCF). This function identifier indicates a column of the IAT 4 which provides the instantiation address, i.e. the respective component vector 4a of the IAT 4 comprising the processing node 1, the processing blade 2, and the local instance of the requested function. The instantiation addresses are managed by the RM 7 independently, after the CM 6 has requested to provide a dedicated instance. The CM 6 gets only instance addresses from the RM 7, if the CM 6 really needs a function. This allows the RM 7 to rearrange at any time, in particular asynchronously to the current activity, all assignment entries to the instantiated components.

If a processing unit 8 within the IMX node 1 fails and all the components are unreachable then the RM 7 replaces the corresponding entries within the tables of all CMs 6. Information between CMs 6 and resource-dispatchers at processing nodes 1 of the IMX-cluster are exchanged and updated via a middle-ware. The RM 7 overwrites the instantiation address with the instantiation on a different processing unit 8.

Load-balancing between processing units 8 where the instances are running can be performed in the same manner. The asynchronous update concept reduces the requirements on the RM 7 concerning processing performance and real-time capability.

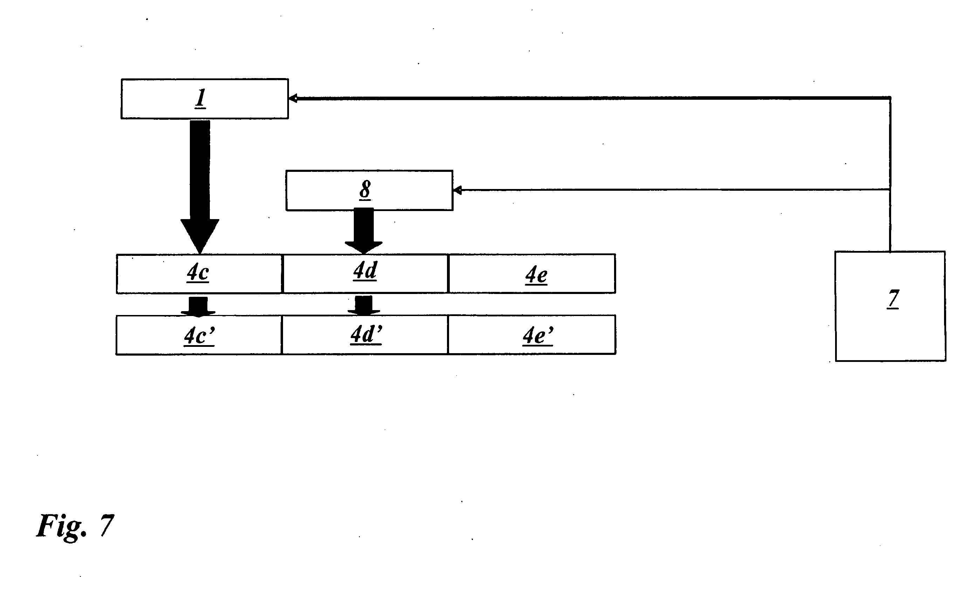

It is possible to introduce a further indirection which allows the RM 7 to replace multiple instantiations with a single write procedure. If a concept of redundant processing units 8 is used, the instance re-arrangement, in failure case, can also be simplified by composing the instance-assignment-vector 4a, as shown in Figure 7, of two or more hierarchical parts - the processing node part and the object instance part, i.e. Figure 7 shows a replacement of a local instance in the IAT 4. The RM 7 has the chance to replace the processing node part comprising the reference to the processing node 1 in the entry 4c and the reference to the processing unit 4d, which means that all the method invocations performed on the former processing unit are replaced with the new one4c' and 4d' in a single step.

An local-instance 4e must not be used individually for a single CM 6 in the whole IMX domain. It can be shared with several other CMs 6 using a queuing mechanism.

The IAT 4 shows that different functions (x-CSCF etc.) must not be represented by different method instantiations. Method names within the different instantiations are well organized, e.g.: "re-register user" method, as in the example of Figure 6, shall be a method name which performs a re-registration of the user's terminal. This method appears normally in the S-CSCF. If several functions (P-CSCF and S-CSCF) are grouped within a single object, the methods of both functions (IMS functions as CSCF) are combined. It is proposed that in this combined instance the "re-register user" method (same name in a single or multi instance) exists also, as indicated by the multiple arrows pointing to 8d in Figure 6. The advantage of this requirement is that the RM 7 can assign the combined instance to different functions in the IAT 4. As a consequence, the RM 7 can simply modify the instance assignment, i.e. the IAT 4, over time to optimize the loads. The additional state information field 4b can also be used to indicate the use rate. The RM 7 can re-arrange the entries depending on the rate information to achieve improved load-balancing.

## Claims

1. Method of controlling a call-session (703) in an IP-packed based communication network by means of a call-session-control system, wherein the method comprises the steps of:
instantiating at least one call-session-control object and at least one call-state-data object (800) for each call-session (703) controlled by the call-session-control system, wherein the respective at least one call-session-control object (601, 602) and the associated at least one call-state-data object (800) provide together the functionality of a call-session-control-function (8a, 8b, 8c, 8d) for the respective call-session (703), whereby the call-state-data object (800) holds the call- and session-state data of the call-session-control-function (8a, 8b, 8c, 8d) and the call-session-control object (601, 602) provides the functional part of the call-session-control-function (8a, 8b, 8c, 8d) specified by one or more service-execution-logic-functions and accesses the associated call-state-data object (800) to be informed about the call- and session-state, and
distributing call related messages (101) received by the call-session-control system to the associated call-session-control object (601, 602) by means of a resource-dispatcher (3) provided by the call-session-control system.

2. Method of controlling a call-session (703) according to claim 1, whereby the call-state-data object (800) holds all call related data of the associated call-session-control-function (8a, 8b, 8c, 8d).

3. Method of controlling a call-session (703) according to claim 1, whereby the resource-dispatcher (3) monitors whether a running call-session-control object (601, 602) crashes or is misbehaving, and if the resource-dispatcher (3) detects such object the resource-dispatcher (3) instantiates a new call-session-control object (601, 602) for continuing the processing of the call-session-control-function (8a, 8b, 8c, 8d) for the respective call-session (703) whereby the new call-session-control object (601, 602) accesses the call-state-data object (800) associated with the crashed object to get the related call- and session-state data.

4. Method of controlling a call-session (703) according to claim 1, whereby the method comprises the further steps of:
instantiating two or more call-state-data objects (800) for each call-session (703), and
mirroring data hold by the two or more call-state-data objects (800).

5. Method of controlling a call-session (703) according to claim 4, whereby the method comprises the step of:
mirroring the transient call- and session-state data hold by the two or more call-state-data object (800).

6. Method of controlling a call-session (703) according to claim 1, whereby the resource-dispatcher (3) monitors whether a running call-state-data object (800) crashes, and if the resource-dispatcher (3) detects such object the resource-dispatcher (3) replaces such object by one of the other call-state-data objects (800) associated with the call-session (703) that holds data mirrored with data of the crashed call-state-data object (800) for continuing the processing of the call-session-control-function (8a, 8b, 8c, 8d) for the respective call-session (703).

7. Method of controlling a call-session (703) according to claim 6, whereby the method comprises the step of:
for replacing such object, instantiating a new call-session-control object (601, 602) for continuing the processing of the call-session-control-function (8a, 8b, 8c, 8d) for the respective call-session (703) whereby the new call-session-control object (601, 602) is adjusted to access the call-state-data object (800) selected by the resource-dispatcher (3) as replacement for the crashed object to get the related call- and session-state data.

8. Method of controlling a call-session (703) according to claim 1, whereby the method comprises the further steps of:
holding, by the resource-dispatcher (3), an instance-assignment-table (4) of instance-assignment-vectors (4f), each vector (4f) is assigned to a corresponding call-session (703) and each vector (4f) comprises data about the at least one call-session-control object (601, 602) and holding by the resource-dispatcher (3) data assigning the at least one call-state-data object (800) to the associated respective call-session (703) and
comprising data about the at least one call-state-data object, in particular comprising the respective call-session-control or call-state-data object-id (4b), processing-node-id (4c), blade-id (4d), and/or local-instance-id (4e), respectively.

9. A call-session-control system for controlling a plurality of call-sessions (703) in an IP-packed based communication network, the call-session-control system comprises one or more processing nodes (1) for processing a plurality of call-session-control-functions (8a, 8b, 8c, 8d) associated with the call-sessions (703), wherein the call-session-control system comprises a resource-dispatcher (3) executed at one or more of the processing nodes (1) and adapted to:
instantiate at least one call-session-control object (601, 602) and at least one call-state-data object (800) for each call-session (703) controlled by the call-session-control system, whereby the respective at least one call-session-control object (601, 602) and the associated at least one call-state-data object (800) provide together the functionality of a call-session-control-function (8a, 8b, 8c, 8d) for the respective call-session (703), and whereby the call-state-data object (800) holds the call- and session-state data of the call-session-control-function (8a, 8b, 8c, 8d) and the call-session-control object (601, 602) provides the functional part of the call-session-control-function (8a, 8b, 8c, 8d) specified by one or
more service-execution-logic-functions and accesses the associated call-state-data object (800) to be informed about the call- and session-state, and distribute call related messages (101) received by the call-session-control system to the associated call-session-control object (601, 602).

10. A call-session-control system for controlling a plurality of call-sessions (703) according to claim 9, wherein the call-session-control system comprises two or more processing nodes (1), each processing node (1) comprises two or more processing blades (2), and the resource-dispatcher (3) is adapted to dynamically distribute the call-session-control objects (601, 602) and the call-state-data objects (800) of the call-sessions (703) between the processing blades (2) of the processing nodes (1) for load-balancing.

## Patentansprüche

1. Verfahren zum Steuern einer Anrufsitzung (703) in einem IP-Paket-basierten Kommunikationsnetzwerk mittels eines Anrufsitzungssteuerungssystems, wobei das Verfahren folgende Schritte umfasst:
Instanziieren von mindestens einem Anrufsitzungssteuerungsobjekt und mindestens einem Anrufstatusdatenobjekt (800) für jede Anrufsitzung (703), die von dem Anrufsitzungssteuerungssystem gesteuert wird, wobei das jeweilige mindestens eine Anrufsitzungssteuerungsobjekt (601, 602) und das zugehörige mindestens eine Anrufstatusdatenobjekt (800) zusammen die Funktionalität einer Anrufsitzungssteuerungsfunktion (8a, 8b, 8c, 8d) für die jeweilige Anrufsitzung (703) bereitstellen, wobei das Anrufstatusdatenobjekt (800) die Anruf- und Sitzungsstatusdaten von der Anrufsitzungssteuerungsfunktion (8a, 8b, 8c, 8d) enthält und das Anrufsitzungssteuerungsobjekt (601, 602) den Funktionsteil der Anrufsitzungssteuerungsfunktion (8a, 8b, 8c, 8d) bereitstellt, der durch eine oder mehrere Serviceausführungslogikfunktionen spezifiziert wird, und auf das zugehörige Anrufstatusdatenobjekt (800) zugreift, das über den Anruf- und Sitzungsstatus zu informieren ist, und Verteilen anrufbezogener Nachrichten (101), die von dem Anrufsitzungssteuerungssystem empfangen werden, an das zugehörige Anrufsitzungssteuerungsobjekt (601, 602) mittels eines Ressourcen-Dispatchers (3), der von dem Anrufsitzungssteuerungssystem bereitgestellt wird.

2. Verfahren zum Steuern einer Anrufsitzung (703) nach Anspruch 1,
wobei das Anrufstatusdatenobjekt (800) alle anrufbezogenen Daten der zugehörigen Anrufsitzungssteuerungsfunktion (8a, 8b, 8c, 8d) enthält.

3. Verfahren zum Steuern einer Anrufsitzung (703) nach Anspruch 1,
wobei der Ressourcen-Dispatcher (3) überwacht, ob ein laufendes Anrufsitzungssteuerungsobjekt (601, 602) abstürzt oder sich falsch verhält, und falls der Ressourcen-Dispatcher (3) ein solches Objekt erkennt, instanziiert der Ressourcen-Dispatcher (3) ein neues Anrufsitzungssteuerungsobjekt (601, 602) zum Fortsetzen der Verarbeitung der Anrufsitzungssteuerungsfunktion (8a, 8b, 8c, 8d) für die jeweilige Anrufsitzung (703), wobei das neue Anrufsitzungssteuerungsobjekt (601, 602) auf das Anrufstatusdatenobjekt (800) zugreift, das zum abgestürzten Objekt gehört, um die zugehörigen Anruf- und Sitzungsstatusdaten zu erhalten.

4. Verfahren zum Steuern einer Anrufsitzung (703) nach Anspruch 1,
wobei das Verfahren folgende weitere Schritte umfasst:
Instanziieren von zwei oder mehreren Anrufstatusdatenobjekten (800) für jede Anrufsitzung (703), und
Spiegeln von Daten, die in den zwei oder mehreren Anrufstatusdatenobjekten (800) enthalten sind.

5. Verfahren zum Steuern einer Anrufsitzung (703) nach Anspruch 4, wobei das Verfahren folgenden Schritt umfasst:
Spiegeln der transienten Anruf- und Sitzungsstatusdaten, die in den zwei oder mehreren Anrufstatusdatenobjekten (800) enthalten sind.

6. Verfahren zum Steuern einer Anrufsitzung (703) nach Anspruch 1,
wobei der Ressourcen-Dispatcher (3) überwacht, ob ein laufendes Anrufstatusdatenobjekt (800) abstürzt, und falls der Ressourcen-Dispatcher (3) ein solches Objekt erkennt, ersetzt der Ressourcen-Dispatcher (3) ein solches Objekt durch eines der anderen Anrufstatusdatenobjekte (800), das zur Anrufsitzung (703) gehört, das Daten enthält, die mit Daten des abgestürzten Anrufstatusdatenobjekts (800) gespiegelt wurden, um die Verarbeitung der Anrufsitzungssteuerungsfunktion (8a, 8b, 8c, 8d) für die jeweilige Anrufsitzung (703) fortzusetzen.

7. Verfahren zum Steuern einer Anrufsitzung (703) nach Anspruch 6,
wobei das Verfahren folgenden Schritt umfasst:
zum Ersetzen eines solchen Objekts, Instanziieren eines neuen Anrufsitzungssteuerungsobjekts (601, 602) zum Fortsetzen der Verarbeitung der Anrufsitzungssteuerungsfunktion (8a, 8b, 8c, 8d) für die jeweilige Anrufsitzung (703), wobei das neue Anrufsitzungssteuerungsobjekt (601, 602) angepasst ist, um auf das Anrufstatusdatenobjekt (800) zuzugreifen, das vom Ressourcen-Dispatcher (3) als Ersatz für das abgestürzte Objekt ausgewählt wird, um die zugehörigen Anruf- und Sitzungsstatusdaten zu erhalten.

8. Verfahren zum Steuern einer Anrufsitzung (703) nach Anspruch 1,
wobei das Verfahren folgende weitere Schritte umfasst:
Enthalten einer Instanzenzuordnungstabelle (4) von Instanzenzuordnungsvektoren (4f) durch den Ressourcen-Dispatcher (3), wobei jeder Vektor (4f) einer entsprechenden Anrufsitzung (703) zugeordnet wird und jeder Vektor (4f) Daten über das mindestens eine Anrufsitzungssteuerungsobjekt (601, 602) umfasst, und
das Enthalten von Daten durch den Ressourcen-Dispatcher (3), die das mindestens eine Anrufstatusdatenobjekt (800) der zugehörigen jeweiligen Anrufsitzung (703) zuordnen, und das Umfassen von Daten über das mindestens eine Anrufstatusdatenobjekt, insbesondere das Umfassen der jeweiligen Anrufsitzungssteuerungs- oder Anrufstatusdaten-Objekt-ID (4b), beziehungsweise Verarbeitungsknoten-ID (4c), Blade-ID (4d) und/oder lokalen Instanz-ID (4e).

9. Anrufsitzungssteuerungssystem zum Steuern einer Vielzahl von Anrufsitzungen (703) in einem IP-Paket-basierten Kommunikationsnetzwerk, wobei das Anrufsitzungssteuerungssystem einen oder mehrere Verarbeitungsknoten (1) zum Verarbeiten einer Vielzahl von Anrufsitzungssteuerungsfunktionen (8a, 8b, 8c, 8d) umfasst, die zu den Anrufsitzungen (703) gehören, wobei das Anrufsitzungssteuerungssystem einen Ressourcen-Dispatcher (3) umfasst, der an einem oder mehreren der Verarbeitungsknoten (1) ausgeführt und angepasst ist, um:
mindestens ein Anrufsitzungssteuerungsobjekt (601, 602) und mindestens ein Anrufstatusdatenobjekt (800) für jede Anrufsitzung (703), die von dem Anrufsitzungssteuerungssystem gesteuert wird, zu instanziieren, wobei das jeweilige mindestens eine Anrufsitzungssteuerungsobjekt (601, 602) und das zugehörige mindestens eine Anrufstatusdatenobjekt (800) zusammen die Funktionalität einer Anrufsitzungssteuerungsfunktion (8a, 8b, 8c, 8d) für die jeweilige Anrufsitzung (703) bereitstellen, und wobei das Anrufstatusdatenobjekt (800) die Anruf- und Sitzungsstatusdaten von der Anrufsitzungssteuerungsfunktion (8a, 8b, 8c, 8d) enthält und das Anrufsitzungssteuerungsobjekt (601, 602) den Funktionsteil der Anrufsitzungssteuerungsfunktion (8a, 8b, 8c, 8d) bereitstellt, der durch eine oder mehrere Serviceausführungslogikfunktionen spezifiziert wird, und auf das zugehörige Anrufstatusdatenobjekt (800) zugreift, das über den Anruf- und Sitzungsstatus zu informieren ist, und anrufbezogene Nachrichten (101), die von dem Anrufsitzungssteuerungssystem empfangen werden, an das zugehörige Anrufsitzungssteuerungsobjekt (601, 602) zu verteilen.

10. Anrufsitzungssteuerungssystem zum Steuern einer Vielzahl von Anrufsitzungen (703) nach Anspruch 9, wobei das Anrufsitzungssteuerungssystem zwei oder mehrere Verarbeitungsknoten (1) umfasst, wobei jeder Verarbeitungsknoten (1) zwei oder mehrere Verarbeitungs-Blades (2) umfasst, und wobei der Ressourcen-Dispatcher (3) angepasst ist, um die Anrufsitzungssteuerungsobjekte (601, 602) und die Anrufstatusdatenobjekte (800) der Anrufsitzungen (703) zwischen den Verarbeitungs-Blades (2) der Verarbeitungsknoten (1) zur Lastverteilung dynamisch zu verteilen.

## Revendications

1. Procédé de commande d'une session d'appel (703) dans un réseau de communication de type paquet IP au moyen d'un système de commande de session d'appel, le procédé comprenant les étapes suivantes :
instancier au moins un objet de commande de session d'appel et au moins un objet de données d'état d'appel (800) pour chaque session d'appel (703) commandée par le système de commande de session d'appel, dans lequel l'au moins un objet de commande de session d'appel (601, 602) respectif et l'au moins un objet de données d'état d'appel (800) associé fournissent ensemble la fonctionnalité d'une fonction de commande de session d'appel (8a, 8b, 8c, 8d) pour la session d'appel (703) respective, l'objet de données d'état d'appel (800) contenant les données d'état d'appel et de session de la fonction de commande de session d'appel (8a, 8b, 8c, 8d) et l'objet de commande de session d'appel (601, 602) fournissant la partie fonctionnelle de la fonction de commande de session d'appel (8a, 8b, 8c, 8d) spécifiée par une ou plusieurs fonctions de logique d'exécution de service et accédant à l'objet de données d'état d'appel (800) associé pour être informé de l'état d'appel et de session, et distribuer des messages concernant l'appel (101) reçus par le système de commande de session d'appel vers l'objet de commande de session d'appel (601, 602) associé au moyen d'un répartiteur de ressources (3) fourni par le système de commande de session d'appel.

2. Procédé de commande d'une session d'appel (703) selon la revendication 1,
l'objet de données d'état d'appel (800) contenant toutes les données concernant l'appel de la fonction de commande de session d'appel (8a, 8b, 8c, 8d) associée.

3. Procédé de commande d'une session d'appel (703) selon la revendication 1,
le répartiteur de ressources (3) surveillant si un objet de commande de session d'appel (601, 602) en cours d'exécution se plante ou fonctionne de manière erronée, et si le répartiteur de ressources (3) détecte cet objet, le répartiteur de ressources (3) instancie un nouvel objet de commande de session d'appel (601, 602) pour continuer le traitement de la fonction de commande de session d'appel (8a, 8b, 8c, 8d) pour la session d'appel (703) respective, le nouvel objet de commande de session d'appel (601, 602) accédant à l'objet de données d'état d'appel (800) associé à l'objet planté pour obtenir les données d'état d'appel et de session associées.

4. Procédé de commande d'une session d'appel (703) selon la revendication 1,
le procédé comprenant les étapes supplémentaires suivantes :
instancier au moins deux objets de données d'état d'appel (800) pour chaque session d'appel (703), et
mettre en miroir des données contenues par les au moins deux objets de données d'état d'appel (800).

5. Procédé de commande d'une session d'appel (703) selon la revendication 4, le procédé comprenant l'étape suivante :
mettre en miroir les données d'état d'appel et de session transitoires contenues par les au moins deux objets de données d'état d'appel (800).

6. Procédé de commande d'une session d'appel (703) selon la revendication 1,
le répartiteur de ressources (3) surveillant si un objet de données d'état d'appel (800) en cours d'exécution se plante, et si le répartiteur de ressources (3) détecte cet objet, le répartiteur de ressources (3) remplace cet objet par un des autres objets de données d'état d'appel (800) associés à la session d'appel (703) qui contient des données mises en miroir avec des données de l'objet de données d'état d'appel (800) planté pour continuer le traitement de la fonction de commande de session d'appel (8a, 8b, 8c, 8d) pour la session d'appel (703) respective.

7. Procédé de commande d'une session d'appel (703) selon la revendication 6, le procédé comprenant l'étape suivante :
pour remplacer cet objet, instancier un nouvel objet de commande de session d'appel (601, 602) pour continuer le traitement de la fonction de commande de session d'appel (8a, 8b, 8c, 8d) pour la session d'appel (703) respective, le nouvel objet de commande de session d'appel (601, 602) étant ajusté pour accéder à l'objet de données d'état d'appel (800) sélectionné par le répartiteur de ressources (3) comme remplacement de l'objet planté pour obtenir les données d'état d'appel et de session associées.

8. Procédé de commande d'une session d'appel (703) selon la revendication 1, le procédé comprenant les étapes supplémentaires suivantes :
contenir, au moyen du répartiteur de ressources (3), une table d'attribution d'instances (4) de vecteurs d'attribution d'instances (4f), chaque vecteur (4f) étant attribué à une session d'appel (703) correspondante et chaque vecteur (4f) comprenant des données concernant l'au moins un objet de commande de session d'appel (601, 602) et contenir, au moyen du répartiteur de ressources (3), des données attribuant l'au moins un objet de données d'état d'appel (800) à la session d'appel (703) respective associée et comprenant des données concernant l'au moins un objet de données d'état d'appel, comprenant en particulier la commande de session d'appel respective ou l'identifiant d'objet de données d'état d'appel (4b), l'identifiant de noeud de traitement (4c), l'identifiant de lame (4d) et/ou l'identifiant d'instance locale (4e), respectivement.

9. Système de commande de session d'appel pour commander une pluralité de sessions d'appel (703) dans un réseau de communication de type paquet IP, le système de commande de session d'appel comprenant un ou plusieurs noeuds de traitement (1) pour traiter une pluralité de fonctions de commande de session d'appel (8a, 8b, 8c, 8d) associées aux sessions d'appel (703), le système de commande de session d'appel comprenant un répartiteur de ressources (3) exécuté au niveau d'un ou de plusieurs des noeuds de traitement (1) et adapté pour :
instancier au moins un objet de commande de session d'appel (601, 602) et au moins un objet de données d'état d'appel (800) pour chaque session d'appel (703) commandée par le système de commande de session d'appel, l'au moins un objet de commande de session d'appel (601, 602) respectif et l'au moins un objet de données d'état d'appel (800) associé fournissent ensemble la fonctionnalité d'une fonction de commande de session d'appel (8a, 8b, 8c, 8d) pour la session d'appel (703) respective, et l'objet de données d'état d'appel (800) contenant les données d'état d'appel et de session de la fonction de commande de session d'appel (8a, 8b, 8c, 8d) et l'objet de commande de session d'appel (601, 602) fournissant la partie fonctionnelle de la fonction de commande de session d'appel (8a, 8b, 8c, 8d) spécifiée par une ou plusieurs fonctions de logique d'exécution de service et accédant à l'objet de données d'état d'appel (800) associé pour être informé de l'état d'appel et de session, et distribuer des messages concernant l'appel (101) reçus par le système de commande de session d'appel vers l'objet de commande de session d'appel (601, 602) associé.

10. Système de commande de session d'appel pour commander une pluralité de sessions d'appel (703) selon la revendication 9, dans lequel le système de commande de session d'appel comprend au moins deux noeuds de traitement (1), chaque noeud de traitement (1) comprenant au moins deux lames de traitement (2), et le répartiteur de ressources (3) est adapté pour distribuer de manière dynamique les objets de commande de session d'appel (601, 602) et les objets de données d'état d'appel (800) des sessions d'appel (703) entre les lames de traitement (2) des noeuds de traitement (1) pour l'équilibrage de charge.
